# FASCICULE DE BREVET EUROPEEN

(11) **EP 4 638 991 B1**
(45) Date de publication et mention de la délivrance du brevet: **09.09.2026**
(21) Numéro de dépôt: 23836718.9
(22) Date de dépôt: 14.12.2023
(51) Int. Cl.: F16H 57/04

(54) **DISPOSITIF DE LUBRIFICATION POUR UNE BOÎTE DE VITESSES D'UN VÉHICULE**
SCHMIERVORRICHTUNG FÜR EIN GETRIEBE EINES FAHRZEUGS
LUBRICATION DEVICE FOR A TRANSMISSION OF A VEHICLE

(30) Priorité: 19.12.2022 FR 2213846
(43) Date de publication de la demande: 29.10.2025
(73) Titulaire: Horse Powertrain Solutions, S.L.U., 28108 Alcobendas, Madrid (ES)
(72) Inventeur: HOTTEBART, Pascal, 78084 Guyancourt (FR)
(74) Mandataire: Elzaburu S.L.P.
(86) Numéro de dépôt international: PCT/EP2023/085973
(87) Numéro de publication internationale: WO 2024/132884

(56) Documents cités:
- WO-A1-2012/090023
- US-A1- 2019 003 570
- US-A1- 2021 156 307

## Description

L'invention concerne un dispositif de lubrification pour une boîte de vitesses d'un véhicule. L'invention porte également sur un circuit de lubrification pour une boîte de vitesses comprenant un tel dispositif. L'invention porte aussi sur une boîte de vitesses comprenant un tel dispositif et/ou un tel circuit de lubrification. L'invention porte encore sur un véhicule comprenant un tel dispositif et/ou un tel circuit de lubrification et/ou une telle boîte de vitesses. L'invention porte enfin sur un procédé de fabrication d'un tel dispositif.

Dans un véhicule automobile, il apparaît important de lubrifier les roulements, engrenages et roues dentées d'une boîte de vitesses.

On connaît des déflecteurs permettant de lubrifier de tels éléments d'une boîte de vitesses, en répartissant de l'huile de lubrification vers différents emplacements de la boîte de vitesses.

Le document US2019003570A1 décrit une boîte de vitesses et un procédé d'alimentation en huile à travers celle-ci. La boîte de vitesses comprend un carter d'huile qui comprend un carter comportant un trou de purge et un autre carter comportant un deuxième trou de purge. L'huile est fournie par les trous de purge aux engrenages respectifs situés dans les plateaux. Le carter d'huile peut également comprendre un aimant positionné dans une fente magnétique du carter d'huile, afin d'éliminer les débris de l'huile. Un tube peut également être fixé au carter d'huile, lequel tube peut comporter un trou de purge, afin de pulvériser l'huile hors du tube et vers un différentiel, par exemple. Le carter de ventilation et le tube peuvent être fabriqués à partir de plastique moulé et peuvent être fabriqués à l'aide du même moule. Le carter de boîte de vitesses peut en outre définir un drain dans une paroi latérale intérieure pour fournir de l'huile à un roulement différentiel, par exemple. Le document US2021156307A1 décrit un dispositif de lubrification pour une boîte de vitesses d'un véhicule.

Toutefois, de tels déflecteurs présentent des inconvénients. En particulier, ils ne permettent pas de répartir de l'huile de lubrification en quantité suffisante vers tous les emplacements requis d'une boîte de vitesses.

Le but de l'invention est de fournir un dispositif de lubrification et un procédé de fabrication d'un tel dispositif remédiant aux inconvénients ci-dessus et améliorant les dispositifs et procédés de fabrication connus de l'art antérieur. En particulier, l'invention permet de réaliser un dispositif de lubrification et un procédé qui soient simples et qui présentent un coût réduit et qui permettent une lubrification optimisée à l'intérieur d'une boîte de vitesses.

L'invention concerne un dispositif de lubrification pour une boîte de vitesses d'un véhicule, comprenant un déflecteur destiné à disperser dans une boîte de vitesse un premier fluide, notamment une première huile de lubrification, et comprenant au moins un conduit de circulation d'un deuxième fluide, notamment une deuxième huile de lubrification, par exemple identique ou sensiblement identique à la première huile de lubrification, le conduit s'étendant au moins partiellement à l'intérieur du déflecteur et étant lié mécaniquement au déflecteur, **et** caractérisé en ce que le déflecteur comprenant un premier bord longitudinal et un deuxième bord longitudinal opposés l'un à l'autre, le déflecteur comprenant en outre une paroi reliant le premier bord longitudinal au deuxième bord longitudinal, le conduit étant lié mécaniquement à ladite paroi.

Le déflecteur peut être courbé, notamment concave avec au moins une concavité destinée à être orientée vers l'intérieur d'une boîte de vitesses. Le conduit peut s'étendre longitudinalement à l'intérieur du déflecteur.

Le dispositif peut comprendre au moins un élément de renforcement mécanique, ledit au moins un élément de renforcement mécanique s'étendant notamment transversalement à l'intérieur du déflecteur, ledit au moins un élément de renforcement mécanique s'étendant notamment du premier bord longitudinal au deuxième bord longitudinal du déflecteur de part et d'autre du conduit.

Le dispositif peut comprendre un premier connecteur à une première extrémité du conduit et/ou un deuxième connecteur à une deuxième extrémité du conduit.

Le dispositif peut comprendre au moins un moyen de fixation, notamment destiné à fixer le dispositif à une enveloppe d'une boîte de vitesses pour un véhicule.

Le dispositif peut être sous la forme d'une seule pièce mécanique, notamment formée par moulage, par exemple d'au moins un matériau plastique.

L'invention concerne également un circuit de lubrification pour une boîte de vitesses, comprenant au moins un dispositif défini précédemment, le circuit comprenant notamment un échangeur thermique auquel est raccordée une première extrémité du conduit et/ou un tuyau de circulation d'huile de lubrification auquel est raccordée une deuxième extrémité du conduit.

L'invention concerne également une boîte de vitesses comprenant au moins une roue dentée et/ou au moins un engrenage et/ou au moins un roulement et comprenant au moins un dispositif défini précédemment et/ou un circuit de lubrification défini précédemment.

L'invention concerne également un véhicule, notamment véhicule automobile, comprenant au moins un dispositif défini précédemment et/ou un circuit de lubrification défini précédemment et/ou une boîte de vitesses définie précédemment.

L'invention concerne également un procédé de fabrication d'un dispositif défini précédemment, comprenant une unique étape de moulage par injection d'au moins un matériau, notamment plastique.

Les dessins annexés représentent, à titre d'exemple, un mode de réalisation d'un dispositif de lubrification selon l'invention et un mode d'exécution d'un procédé de fabrication d'un dispositif de lubrification selon l'invention.
La figure 1 est une vue en perspective représentant une boîte de vitesses comprenant un déflecteur.
La figure 2 est une vue en perspective partiellement éclatée représentant une boîte de vitesses comprenant un déflecteur.
La figure 3 est une vue partielle en coupe représentant une boîte de vitesses comprenant une couronne de différentiel et un déflecteur.
La figure 4 représente un mode de réalisation d'un dispositif de lubrification.
La figure 5 est une vue arrière représentant une partie d'un circuit de lubrification pour une boîte de vitesses comprenant un dispositif de lubrification et un tuyau de circulation d'huile de lubrification.
La figure 6 est une vue avant correspondant à la figure 5.
La figure 7 est une vue avant représentant un circuit de lubrification d'une boîte de vitesses d'un véhicule comprenant un dispositif de lubrification, ainsi qu'un système de transmission.
La figure 8 est une vue arrière correspondant à la figure 7.

On définit un repère orthonormé dans lequel l'axe x est orienté de l'arrière vers l'avant d'une boîte de vitesses 101, 201, l'axe y est orienté de la gauche vers la droite d'une boîte de vitesses 101, 201, l'axe z est orienté du bas vers le haut ou d'une partie inférieure vers une partie supérieure d'une boîte de vitesses 101, 201, l'axe z étant notamment un axe vertical ou sensiblement vertical.

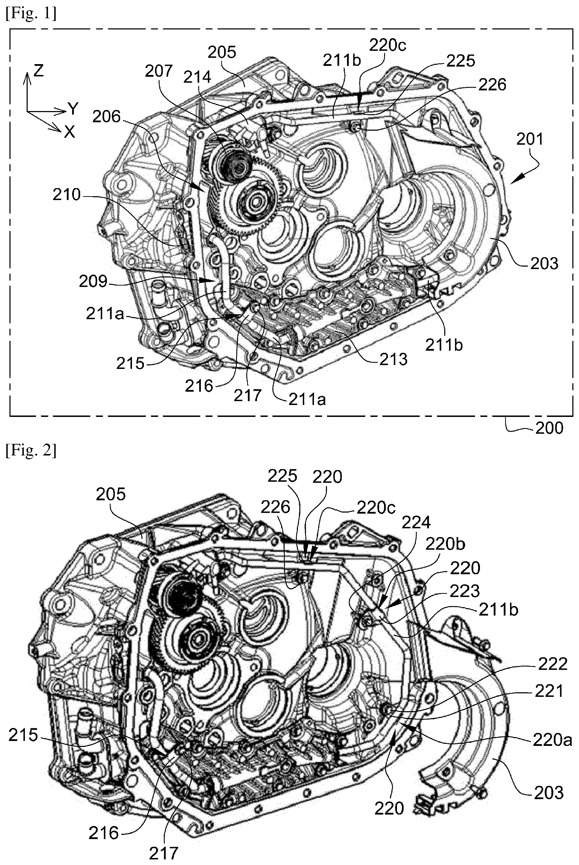

Un exemple d'un véhicule 200 équipé d'une boîte de vitesses 201 comprenant un déflecteur 203 est décrit ci-après en référence aux figures 1 à 3.

Le véhicule 200 peut être un véhicule automobile.

Le véhicule 200 est par exemple un véhicule équipé d'un groupe motopropulseur comprenant un moteur thermique. Le véhicule 200 peut être un véhicule hybride, équipé d'un groupe motopropulseur comprenant un moteur thermique et une batterie.

La boîte de vitesses 201 comprend une enveloppe ou boîtier ou carter 205.

La boîte de vitesses 201 comprend un système de transmission mécanique 206 comprenant par exemple au moins une roue dentée et/ou un système d'engrenages et/ou au moins un roulement 207. Le système de transmission mécanique 206 se trouve par exemple en partie supérieure gauche de la boîte de vitesses 201.

La boîte de vitesses 201 comprend un circuit 209 d'alimentation en huile de lubrification.

Le circuit 209 d'alimentation en huile de lubrification comprend un premier tuyau 211a de circulation d'huile de lubrification et un deuxième tuyau 211b de circulation d'huile de lubrification.

La boîte de vitesses 201 peut comprendre un échangeur thermique 213, notamment un refroidisseur thermique utilisant un fluide de refroidissement, notamment de l'eau et/ou une huile de refroidissement.

Une première extrémité du premier tuyau 211a peut être située à un emplacement d'une entrée 210 d'huile de lubrification. L'entrée 210 d'huile de lubrification est notamment formée par un alésage dans l'enveloppe 205. L'entrée 210 est notamment destinée à être raccordée à une alimentation en huile de lubrification.

Une deuxième extrémité du premier tuyau 211a peut être raccordée à l'échangeur thermique 213.

Une première extrémité du deuxième tuyau 211b peut être raccordée à l'échangeur thermique 213. Une deuxième extrémité du deuxième tuyau 211b peut être raccordée à un déflecteur supplémentaire 214.

La deuxième extrémité du deuxième tuyau 211b peut se trouver à proximité de l'au moins un roulement 207 ou du système de transmission mécanique 206.

Le deuxième tuyau 211b est notamment au moins partiellement recouvert par le déflecteur 203 (figure 2). Le deuxième tuyau 211b peut être agencé au moins en partie entre le déflecteur 203 et l'enveloppe 205.

La boîte de vitesses 201 peut comprendre au moins un système de fixation 215 pour maintenir le premier tuyau 211a et/ou minimiser des vibrations du premier tuyau 211a. Le système de fixation 215 comprend par exemple une patte 216 et une vis 217.

La boîte de vitesses 201 peut comprendre au moins un système de fixation 220 pour maintenir le deuxième tuyau 211b et/ou minimiser des vibrations du deuxième tuyau 211b. L'au moins un système de fixation 220 comprend par exemple une patte ou un clip. La patte ou le clip est destinée à maintenir le deuxième tuyau 211b. L'au moins un système de fixation 220 comprend par exemple une vis pour fixer la patte ou le clip à l'intérieur de la boîte de vitesses 201, notamment à l'enveloppe 205.

La boîte de vitesses 201 peut comprendre un premier système de fixation 220a et/ou un deuxième système de fixation 220b et/ou un troisième système de fixation 220c pour maintenir le deuxième tuyau 211b.

Le premier système de fixation 220a comprend par exemple une patte ou un clip 221 destinée à être reliée à l'enveloppe 205 par l'intermédiaire d'une vis 222. Le deuxième système de fixation 220b comprend par exemple une patte ou un clip 223 destinée à être reliée à l'enveloppe 205 par l'intermédiaire d'une vis 224. Le troisième système de fixation 220c comprend par exemple une patte ou un clip 225 destinée à être reliée à l'enveloppe 205 par l'intermédiaire d'une vis 226.

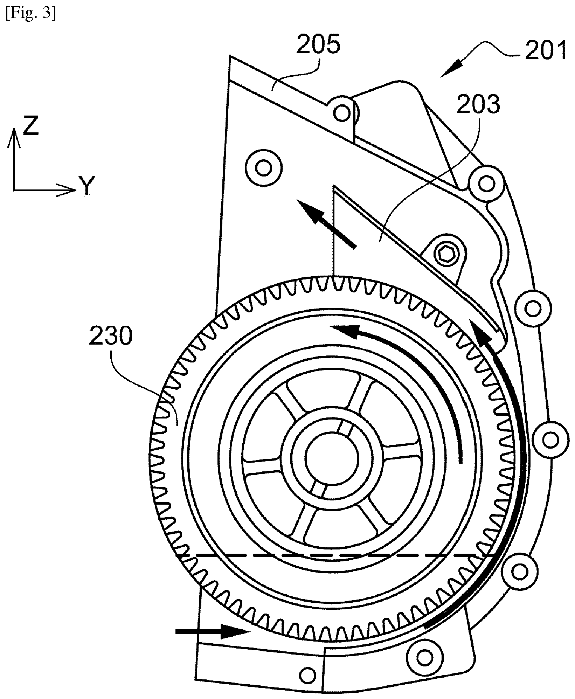

Le déflecteur 203 entoure notamment au moins partiellement un organe denté 230 (figure 3). L'organe denté 230 peut comprendre au moins une roue dentée.

L'organe denté 230 est par exemple une couronne de différentiel.

Dans la boite de vitesses 201, tout ou partie de la lubrification est réalisée par projection et récupération par gravitation de l'huile de lubrification.

La couronne de différentiel 230 est destinée à faire remonter de l'huile de lubrification de bas en haut par rotation et à la projeter par l'intermédiaire du déflecteur 203 à l'intérieur de la boîte de vitesse 201, notamment vers le système de transmission mécanique 206.

La boîte de vitesses 201 peut comprendre un aimant, notamment disposé en partie inférieure de la boîte de vitesses 201, par exemple entre la face arrière de l'enveloppe 205 et le déflecteur 203. L'aimant est destiné à attirer puis retenir des particules métalliques produites par frottement lors du fonctionnement de la boîte de vitesses 201.

Le circuit 209 d'alimentation en huile de lubrification peut comprendre en outre d'autres composants en amont et en aval destinés à assurer la récupération et/ou la distribution de l'huile de lubrification.

Les premier et deuxième tuyaux 211a, 211b sont notamment destinés à distribuer de l'huile de lubrification vers le système de transmission mécanique 206, en particulier pour lubrifier le roulement 207, notamment par l'intermédiaire du déflecteur supplémentaire 214. En effet, le déflecteur 203 seul ne permet d'assurer une lubrification suffisante du système de transmission mécanique 206, en particulier du roulement 207.

Une boîte de vitesse 201 du type de celle décrite ci-dessus présente des contraintes nombreuses et diverses en termes d'encombrement, ce qui ne permet pas d'avoir un parcours simple et direct pour le deuxième tuyau 211b. Il en résulte qu'une longueur élevée de tuyau est requise pour le deuxième tuyau 211b.

Un tuyau de longueur élevée requiert plusieurs systèmes de fixation pour le maintenir et/ou minimiser des vibrations du tuyau. Plusieurs systèmes de fixation 220a, 220b, 220c sont requis pour le deuxième tuyau 211b.

Un tuyau de longueur élevée requiert l'utilisation d'un chariot spécifique lors de la fabrication en série de véhicules 200, pour l'agencement en série d'un deuxième tuyau 211b dans une boîte de vitesse 201 de tels véhicules 200. Un tel chariot présente un encombrement élevé.

Dans une boîte de vitesse 201 du type de celle décrite ci-dessus, la mise en place du deuxième tuyau 211b est difficile, notamment à cause du manque d'espace libre dû à l'encombrement du déflecteur 203 et/ou à l'encombrement de l'échangeur thermique 213.

Une boîte de vitesse 201 du type de celle décrite ci-dessus présentant un encombrement élevé, notamment en raison de contraintes architecturales, il en résulte un manque d'espace libre pour agencer divers composants d'un circuit d'alimentation en huile de lubrification. Il en résulte un besoin pour des composants compacts et/ou présentant un encombrement minimal.

L'invention propose un dispositif de lubrification pour une boîte de vitesses comprenant un déflecteur et un conduit de circulation d'un fluide de lubrification, le déflecteur et le conduit étant co-intégrés sous la forme d'une seule pièce mécanique. Un tel dispositif de lubrification, notamment monobloc, est destiné à assurer, notamment au moyen du déflecteur, une fonction de dispersion ou de répartition d'un premier fluide de lubrification dans une boîte de vitesses et à assurer, notamment au moyen du conduit, une fonction d'alimentation en un deuxième fluide de lubrification dans une boîte de vitesses. Les premier et deuxième fluides de lubrification peuvent être identiques ou sensiblement identiques.

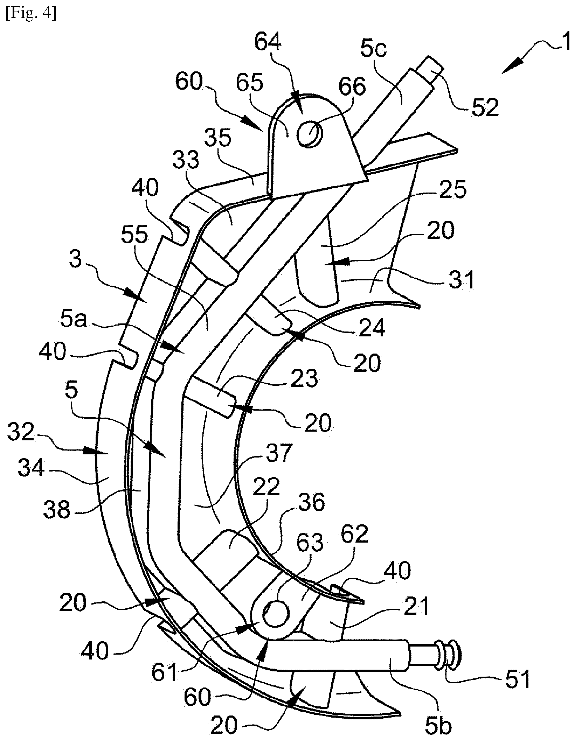

Un mode de réalisation d'un dispositif 1 de lubrification pour une boîte de vitesses 101 d'un véhicule 100 est décrit ci-après en référence à la figure 4.

Le véhicule 100 peut être un véhicule automobile.

Le véhicule 100 est par exemple un véhicule équipé d'un groupe motopropulseur comprenant un moteur thermique. Le véhicule 100 peut être un véhicule hybride, équipé d'un groupe motopropulseur comprenant un moteur thermique et une batterie.

Le dispositif de lubrification 1 comprend un déflecteur 3 et un conduit 5.

Le déflecteur 3 est destiné à disperser, notamment dans une boîte de vitesse 101, un premier fluide, notamment une première huile de lubrification. Le déflecteur 3 est notamment destiné à faire remonter/guider de l'huile de lubrification présente à l'intérieur d'une boîte de vitesses 101 d'une partie inférieure vers une partie supérieure d'une boîte de vitesses 101, en s'opposant aux effets de la gravitation. Pour cela, le déflecteur 3 peut être associé à une couronne de différentiel du type de celle décrite en relation avec la figure 3. Le déflecteur 3 est notamment destiné à entourer au moins partiellement une couronne de différentiel. Un premier fluide, notamment une première huile de lubrification, est destinée à être acheminée par guidage dans le déflecteur 3, à l'extérieur du conduit 5, par exemple sous forme de goutte à goutte.

Un deuxième fluide, notamment une deuxième huile de lubrification, par exemple identique ou sensiblement identique à la première huile de lubrification, est destinée à être acheminée par écoulement dans le conduit 5, à l'intérieur du conduit 5.

Le conduit 5 est notamment un conduit de circulation d'un deuxième fluide, notamment une deuxième huile de lubrification, par exemple identique ou sensiblement identique à la première huile de lubrification.

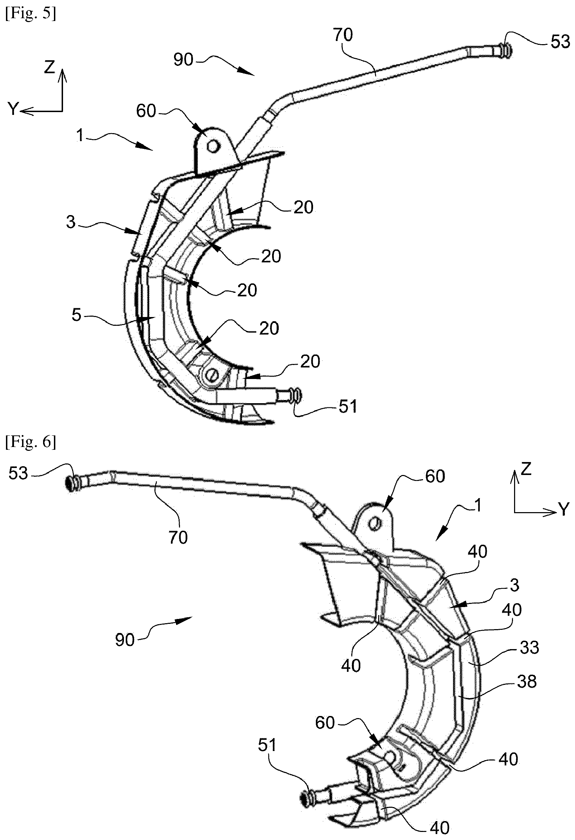

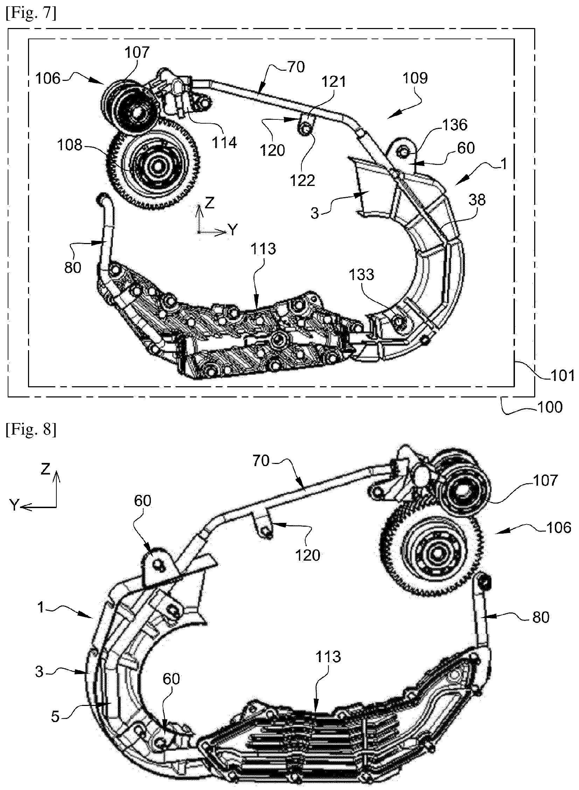

Le conduit 5, éventuellement destiné à être raccordé à un tuyau 70 (figures 5 et 6), est notamment destiné à lubrifier un système de transmission 106, par exemple situé en partie supérieure d'une boîte de vitesses 101, en particulier à lubrifier un roulement 107 d'un système de transmission 106 (figures 7 et 8).

Le conduit 5 s'étend au moins partiellement à l'intérieur du déflecteur 3.

Le conduit 5 peut comprendre une portion principale 5a. La portion principale 5a s'étend notamment à l'intérieur du déflecteur 3.

Le conduit 5 peut comprendre en outre une première portion d'extrémité 5b et une deuxième portion d'extrémité 5c. La portion principale 5a s'étend par exemple entre la première portion d'extrémité 5b et la deuxième portion d'extrémité 5c. La première portion d'extrémité 5b peut s'étendre au moins partiellement à l'extérieur du déflecteur 3. La deuxième portion d'extrémité 5c peut s'étendre au moins partiellement à l'extérieur du déflecteur 3.

Le conduit 5 est lié mécaniquement au déflecteur 3.

Le déflecteur 3 est par exemple en au moins un matériau plastique. Le conduit 5 est par exemple en au moins un matériau plastique.

Le déflecteur 3 peut comprendre un premier bord longitudinal 31 et un deuxième bord longitudinal 32. Le premier bord longitudinal 31 et le deuxième bord longitudinal 32 sont notamment opposés l'un à l'autre.

Le premier bord longitudinal 31 est par exemple une feuille mince, notamment courbée. Le deuxième bord longitudinal 32 est par exemple une feuille mince, notamment courbée.

Le déflecteur 3 peut comprendre en outre une paroi 33. La paroi 33 relie notamment le premier bord longitudinal 31 au deuxième bord longitudinal 32. La paroi 33 peut être agencée entre le premier bord longitudinal 31 et le deuxième bord longitudinal 32, notamment perpendiculairement ou sensiblement perpendiculairement au premier bord longitudinal 31 et/ou au deuxième bord longitudinal 32.

Le conduit 5 est par exemple en forme de tube creux. Le conduit 5 peut notamment comprendre une ouverture allongée pour la circulation du deuxième fluide de lubrification. L'ouverture allongée du conduit 5 est notamment au moins partiellement délimitée par la paroi 55 du conduit 5, et éventuellement par une portion de la paroi 33 du déflecteur 3.

La paroi 55 du conduit 5 est par exemple de forme cylindrique.

Le déflecteur 3 peut être courbé ou non rectiligne.

Le premier bord longitudinal 31 peut être courbé ou non rectiligne. Le premier bord longitudinal 31 peut avoir la forme d'une portion d'anneau.

Le premier bord longitudinal 31 est notamment destiné à faire face à l'intérieur d'une boîte de vitesses 101. Le deuxième bord longitudinal 32 est notamment destiné à faire face à une enveloppe d'une boîte de vitesses 101.

Le deuxième bord longitudinal 32 peut être courbé ou non rectiligne. Le deuxième bord longitudinal 32 peut avoir la forme d'une portion d'anneau ou sensiblement la forme d'une portion d'anneau, notamment de diamètre supérieur au diamètre du premier bord longitudinal 31 en forme de portion d'anneau. Le deuxième bord longitudinal 32 peut comprendre une première portion 34 ayant la forme d'une portion d'anneau et une deuxième portion 35 rectiligne. Le deuxième bord longitudinal 32 peut comprendre un méplat 35.

La paroi 33 peut être courbée ou non rectiligne.

Le déflecteur 3 peut être concave. Le déflecteur 3 peut comprendre au moins une concavité destinée à être orientée vers l'intérieur d'une boîte de vitesses 101.

Le déflecteur 3 peut comprendre une première concavité 36 délimitée par le premier bord longitudinal 31. Le déflecteur 3 peut comprendre une deuxième concavité 37 délimitée par le premier bord longitudinal 31, la paroi 33 et le deuxième bord longitudinal 32. Le conduit 5 est notamment agencé dans la deuxième concavité 37 du déflecteur 3. Le conduit 5 est notamment lié mécaniquement à la paroi 33 du déflecteur 3, par exemple par une portion de base 38. La portion de base 38 du déflecteur 3 forme par exemple une tranchée du côté de la paroi 33 opposé au côté de la paroi 33 sur lequel est agencé le conduit 5 (figures 6 et 7).

Le conduit 5 s'étend notamment longitudinalement à l'intérieur du déflecteur 3, par exemple au milieu du déflecteur 3.

Le dispositif 1 peut comprendre au moins un élément de renforcement mécanique 20 ou raidisseur. Ledit au moins un élément de renforcement mécanique 20 est destiné à rigidifier le déflecteur 3.

Le dispositif 1 peut comprendre plusieurs éléments de renforcement mécanique 20 répartis à l'intérieur du déflecteur 3 le long du déflecteur 3. Le dispositif 1 comprend par exemple un premier élément de renforcement mécanique 21 et/ou un deuxième élément de renforcement mécanique 22 et/ou un troisième élément de renforcement mécanique 23 et/ou un quatrième élément de renforcement mécanique 24 et/ou un cinquième élément de renforcement mécanique 25.

Ledit au moins un élément de renforcement mécanique 20 s'étend notamment transversalement à l'intérieur du déflecteur 3, par exemple dans la deuxième concavité 37.

Ledit au moins un élément de renforcement mécanique 20 a par exemple la forme d'une nervure.

Ledit au moins un élément de renforcement mécanique 20 est par exemple en au moins un matériau plastique.

Ledit au moins un élément de renforcement mécanique 20 peut être une nervure de rigidification du déflecteur 3. Ledit au moins un élément de renforcement mécanique 20 peut être lié mécaniquement au déflecteur 3 et/ou au conduit 5 à l'extérieur du conduit 5, notamment sous la forme d'une seule pièce mécanique.

Ledit au moins un élément de renforcement mécanique 20 forme par exemple une concavité 40 respective orientée du côté de la paroi 33 opposé au côté de la paroi 33 sur lequel est agencé le conduit 5.

Ledit au moins un élément de renforcement mécanique 20 peut s'étendre du premier bord longitudinal 31 au deuxième bord longitudinal 32 du déflecteur 3, par exemple de part et d'autre du conduit 5.

Le dispositif 1 peut comprendre un premier connecteur 51 à une première extrémité du conduit 5 et/ou un deuxième connecteur 52 à une deuxième extrémité du conduit 5.

Le premier connecteur 51 est par exemple destiné à raccorder le conduit 5 à un échangeur thermique 113, notamment de façon étanche. Le deuxième connecteur 52 est par exemple destiné à raccorder le conduit 5 à un tuyau 70 ou à un déflecteur supplémentaire 114, notamment de façon étanche.

Le premier connecteur 51 est par exemple en au moins un matériau plastique. Le deuxième connecteur 52 est par exemple en au moins un matériau plastique.

Le premier connecteur 51 et/ou le deuxième connecteur 52 peut être lié mécaniquement au conduit 5, notamment sous la forme d'une seule pièce mécanique.

Le premier connecteur 51 peut être lié à une extrémité libre de la première portion d'extrémité 5b, notamment opposée à l'extrémité de la première portion d'extrémité 5b liée à la portion principale 5a.

Le deuxième connecteur 52 peut être lié à une extrémité libre de la deuxième portion d'extrémité 5c, notamment opposée à l'extrémité de la deuxième portion d'extrémité 5c liée à la portion principale 5a.

Selon une variante, dans le cas où le conduit 5 comprend uniquement une portion principale 5a, le premier connecteur 51 peut être lié à une extrémité, notamment amont, de la portion principale 5a du conduit 5 et/ou le deuxième connecteur 52 peut être lié à une extrémité, notamment avale, de la portion principale 5a du conduit 5.

Les termes « amont » et « aval » sont définis en référence au sens de circulation d'un fluide dans le conduit 5.

Un deuxième fluide, notamment une deuxième huile de lubrification identique ou sensiblement identique à la première huile de lubrification, est notamment destiné à entrer par une ouverture d'entrée du premier connecteur 51, puis à s'écouler dans le conduit 5 et sortir du conduit 5 par une ouverture de sortie du deuxième connecteur 52.

Le dispositif 1 peut comprendre au moins un moyen de fixation 60, par exemple un premier moyen de fixation 61 et/ou un deuxième moyen de fixation 64.

L'au moins un moyen de fixation 60 est notamment destiné à fixer le dispositif 1 à une enveloppe d'une boîte de vitesses 101 pour un véhicule 100.

Le premier moyen de fixation 61 comprend par exemple une première patte de fixation 62. La première patte de fixation 62 comprend notamment une ouverture 63 destinée à recevoir une vis 133.

Le premier moyen de fixation 61 est par exemple en au moins un matériau plastique.

Le premier moyen de fixation 61 peut être lié mécaniquement au déflecteur 3, notamment au premier bord longitudinal 31 du déflecteur 3. Le premier moyen de fixation 61 peut s'étendre du premier bord longitudinal 31 vers le deuxième bord longitudinal 32, notamment parallèlement à la paroi 33 du déflecteur 3. Le premier moyen de fixation 61 peut faire face à la paroi 33 du déflecteur 3, l'ouverture 63 étant disposée en regard de la paroi 33 à distance du conduit 5 de sorte qu'une vis 133 ne vienne pas en contact avec le conduit 5.

Le deuxième moyen de fixation 64 comprend par exemple une deuxième patte de fixation 65. La deuxième patte de fixation 65 comprend notamment une ouverture 66 destinée à recevoir une vis 136.

Le deuxième moyen de fixation 64 est par exemple en au moins un matériau plastique.

Le deuxième moyen de fixation 64 peut être lié mécaniquement au déflecteur 3, notamment au deuxième bord longitudinal 32 du déflecteur 3. Le deuxième moyen de fixation 64 peut s'étendre à partir du deuxième bord longitudinal 32 en s'écartant du déflecteur 3, notamment parallèlement à la paroi 33 du déflecteur 3.

Le dispositif 1 peut être en au moins un matériau plastique. Le dispositif 1 peut être en un matériau composite.

Avantageusement, le dispositif 1 peut être sous la forme d'une seule pièce mécanique, notamment formée par moulage, par exemple d'au moins un matériau plastique.

Le déflecteur 3 et le conduit 5, et éventuellement l'au moins élément de renforcement mécanique 20 et/ou le premier connecteur 51 et/ou le deuxième connecteur 52 et/ou l'au moins un moyen de fixation 60, peuvent être sous la forme d'une seule pièce mécanique.

Le dispositif 1 est destiné à être fixé sur une enveloppe d'une boîte de vitesse 101, par exemple par l'intermédiaire d'une première vis 133 destinée à coopérer avec le premier moyen de fixation 61, notamment destinée à être insérée dans l'ouverture 63 de la première patte de fixation 62, et/ou par l'intermédiaire d'une deuxième vis 136 destinée à coopérer avec le deuxième moyen de fixation 64, notamment destinée à être insérée dans l'ouverture 66 de la deuxième patte de fixation 65.

Un mode de réalisation d'un assemblage 90 d'un dispositif de lubrification 1 tel que celui décrit en référence à la figure 4 avec un tuyau 70 de circulation d'huile de lubrification est décrit ci-après en référence aux figures 5 et 6.

Une première extrémité du tuyau 70 est par exemple raccordée à la deuxième extrémité, notamment avale, du conduit 5, par exemple au moyen du deuxième connecteur 52. Une deuxième extrémité du tuyau 70 est par exemple destinée à être liée à un troisième connecteur 53.

Le tuyau 70 peut être en acier inoxydable, couramment désigné par l'appellation inox.

Un mode de réalisation d'une boîte de vitesses 101 pour un véhicule 100 comprenant au moins un dispositif de lubrification 1 tel que celui décrit en référence à la figure 4 est décrit ci-après en référence aux figures 7 et 8. La boîte de vitesses 101 est par exemple destinée à être agencée dans un véhicule 100, notamment un véhicule automobile.

La boîte de vitesses 101 comprend au moins un dispositif de lubrification 1 du type de celui décrit ci-dessus.

La boîte de vitesses 101 peut comprendre un échangeur thermique 113, notamment un refroidisseur thermique utilisant un fluide de refroidissement, notamment de l'eau et/ou une huile de refroidissement. L'échangeur thermique 113 peut comprendre un boîtier en aluminium.

Une première extrémité du conduit 5 du dispositif 1 peut être raccordée à l'échangeur thermique 113, notamment à une extrémité avale de l'échangeur thermique 113.

Une deuxième extrémité du conduit 5 du dispositif 1 peut être raccordée à une première extrémité d'un tuyau 70 de circulation d'huile de lubrification.

La boîte de vitesses 101 peut comprendre un premier tuyau 80 de circulation d'huile de lubrification. Une première extrémité du premier tuyau 80 peut être raccordée à une alimentation en huile de lubrification. Une deuxième extrémité du premier tuyau 80 peut être raccordée à l'échangeur thermique 113.

Une deuxième extrémité d'un tuyau 70 de circulation d'huile de lubrification peut être raccordée à un déflecteur supplémentaire 114.

Le premier tuyau 80 relié à l'échangeur thermique 113, relié au dispositif 1, éventuellement relié à un tuyau 70 lui-même éventuellement relié à déflecteur supplémentaire 114 optionnel, forment un circuit de lubrification 109, notamment pour une boîte de vitesses 101 d'un véhicule 100.

Un tel circuit de lubrification 109 est destiné à assurer, notamment au moyen du déflecteur 3 du dispositif de lubrification 1, une fonction de dispersion ou de répartition d'un premier fluide de lubrification dans une boîte de vitesses 101 et à assurer, notamment au moyen du conduit 5 du dispositif de lubrification 1, ainsi qu'au moyen du premier tuyau 80 relié à l'échangeur thermique 113, et éventuellement au moyen d'un tuyau 70 relié à un déflecteur supplémentaire 114 optionnel, une fonction d'alimentation en un deuxième fluide de lubrification dans une boîte de vitesses 101. Les premier et deuxième fluides de lubrification peuvent être identiques ou sensiblement identiques.

Le déflecteur supplémentaire 114 peut être agencé en partie supérieure d'une boîte de vitesses 101. Le déflecteur supplémentaire 114 est notamment destiné à réaliser un guidage d'huile de lubrification, notamment pour lubrifier un système de transmission mécanique 106 et/ou au moins un roulement et/ou au moins un arbre situés en partie supérieure d'une boîte de vitesses 101, notamment un roulement 107 et/ou un roulement 108.

Le dispositif 1 peut entourer notamment au moins partiellement une couronne de différentiel du type de celle décrite en relation avec la figure 3, ce qui permet notamment de disperser ou de répartir un premier fluide de lubrification dans une boîte de vitesses 101.

La boîte de vitesses 101 peut comprendre un système de transmission mécanique 106 comprenant par exemple au moins un roulement 107, 108 et/ou au moins une roue dentée et/ou un système d'engrenages et/ou au moins un palier et/ou au moins un pignon et/ou au moins un arbre. Le système de transmission mécanique 106 est par exemple disposé en partie supérieure d'une boîte de vitesses 101.

Le circuit de lubrification 109 est notamment destiné à distribuer de l'huile de lubrification vers le système de transmission mécanique 106, en particulier pour lubrifier le roulement 107.

La boîte de vitesses 101 peut comprendre un aimant, notamment disposé en partie inférieure de la boîte de vitesses 101. L'aimant est destiné à attirer puis retenir des particules métalliques produites par frottement lors du fonctionnement de la boîte de vitesses. L'aimant peut être agencé en partie inférieure du déflecteur 3 du dispositif 1.

La boîte de vitesses 101 peut comprendre un système de fixation 120 pour maintenir le tuyau 70 et/ou minimiser des vibrations du tuyau 70. L'au moins un système de fixation 120 comprend par exemple une patte 121 ou un clip. La patte 121 ou le clip est destinée à maintenir le tuyau 70. Le système de fixation 120 comprend par exemple une vis 122 pour fixer la patte ou le clip à l'intérieur de la boîte de vitesses 101, notamment à une enveloppe de la boîte de vitesses 101.

Un dispositif de lubrification 1 du type de celui décrit ci-dessus en relation avec la figure 4 permet d'utiliser un tuyau 70 de longueur réduite par rapport à la longueur du deuxième tuyau 211b d'une boîte de vitesses 201 du type de celle décrite en relation avec les figures 1 et 2. Au lieu d'être agencée entre le déflecteur 3 et l'enveloppe de la boîte de vitesses 101, une partie de tuyau est remplacée par le conduit 5 co-intégré avec le déflecteur 3 dans le dispositif 1. A titre d'exemple, environ la moitié de la longueur d'un deuxième tuyau 211b du type de ceux habituellement utilisés peut être intégrée dans le dispositif 1 en tant que conduit 5.

Un avantage d'un dispositif de lubrification 1 du type de celui décrit ci-dessus, comprenant un conduit 5 de circulation d'huile de lubrification co-intégré avec un déflecteur 3 dans le dispositif 1, réside dans une raideur accrue du conduit 5 par rapport à un tuyau du type de ceux habituellement utilisés.

Un avantage d'un dispositif de lubrification 1 du type de celui décrit ci-dessus est lié au fait qu'il peut être fabriqué sous la forme d'une seule pièce mécanique. Il en résulte qu'un tel dispositif permet de minimiser le nombre d'étapes d'assemblage lors de sa fabrication et/ou son encombrement. Il en résulte un procédé de fabrication d'un tel dispositif simple et rapide à mettre en œuvre et présentant un coût réduit. Un tel dispositif de lubrification 1 ne requiert pas l'utilisation d'un gabarit, notamment pour le transfert d'un poste de fabrication à un autre poste de fabrication.

Un avantage d'un dispositif de lubrification 1 du type de celui décrit ci-dessus est lié au fait qu'un conduit 5 de circulation d'huile de lubrification peut être co-intégré avec un déflecteur 3 du type de ceux habituellement utilisés, modifié pour pouvoir intégrer le conduit 5. Il en résulte un coût réduit de conception et/ou de fabrication d'un tel dispositif 1.

Un avantage d'un dispositif de lubrification 1 du type de celui décrit ci-dessus réside dans le fait qu'il permet de réduire les vibrations d'un circuit de lubrification d'une boîte de vitesses tout en minimisant le nombre de systèmes de fixation requis pour maintenir un tuyau 70 de circulation d'huile de lubrification à l'extérieur du dispositif 1.

Selon une variante d'un circuit de lubrification 109 du type de celui décrit ci-dessus en relation avec les figures 7 et 8, le circuit de lubrification 109 peut ne pas comprendre de tuyau 70 de circulation d'huile de lubrification en aval du dispositif de lubrification 1. Dans ce cas, un tel tuyau 70 peut être remplacé par un conduit de circulation d'huile de lubrification intégré au dispositif 1 ou lié mécaniquement au dispositif 1 sous la forme d'une seule pièce ou par un prolongement d'un conduit 5 d'un dispositif 1 du type de celui décrit ci-dessus. Il en résulte un assemblage facilité d'un tel circuit de lubrification 109 et un montage facilité d'un tel circuit de lubrification 109 dans une boîte de vitesses 101.

Un mode d'exécution d'un procédé de fabrication d'un dispositif de lubrification 1 est décrit ci-après.

Le procédé peut comprendre une unique étape de moulage par injection d'au moins un matériau, notamment plastique.

Le déflecteur 3 et le conduit 5, et éventuellement l'au moins élément de renforcement mécanique 20 et/ou le premier connecteur 51 et/ou le deuxième connecteur 52 et/ou l'au moins un moyen de fixation 60, peuvent être formés sous la forme d'une seule pièce mécanique en utilisant un seul moule.

Le dispositif 1 peut être sous la forme d'une seule pièce mécanique, notamment formée par moulage, par exemple d'au moins un matériau plastique.

Un dispositif 1 comprenant un premier et un deuxième bords longitudinaux 31, 32 ayant la forme d'une portion d'anneau ou sensiblement d'une portion d'anneau a été décrit ci-dessus. D'autres formes pourront être choisies pour le déflecteur 3. Le déflecteur 3 pourra avoir une forme configurée pour projeter de l'huile de lubrification du bas vers le haut d'une boîte de vitesses.

Un dispositif 1 comprenant un conduit 5 s'étendant longitudinalement à l'intérieur d'un déflecteur 3 a été décrit ci-dessus. L'agencement du conduit 5 dans le déflecteur 3 pourra être réalisé d'une autre façon, par exemple selon un parcours comprenant des virages ou courbures.

Il a été décrit ci-dessus un dispositif 1 comprenant un seul conduit 5. Le dispositif 1 pourra bien entendu comprendre plusieurs conduits 5, avantageusement liés mécaniquement au déflecteur 3 sous la forme d'une seule pièce mécanique.

Le déflecteur supplémentaire 114 du circuit de lubrification 109 pourrait être réalisé sous la forme d'un dispositif 1 du type de celui décrit ci-dessus.

Un circuit de lubrification 109 pourrait comprendre un premier dispositif 1 du type de celui décrit ci-dessus, raccordé à un tuyau du type de ceux habituellement utilisés, lui-même raccordé à un deuxième dispositif 1 du type de celui décrit ci-dessus.

## Revendications

1. Dispositif de lubrification (1) pour une boîte de vitesses d'un véhicule,
comprenant un déflecteur (3) destiné à disperser dans une boîte de vitesse un premier fluide, notamment une première huile de lubrification, et en ce qu'il comprend au moins un conduit (5) de circulation d'un deuxième fluide, notamment une deuxième huile de lubrification, par exemple identique ou sensiblement identique à la première huile de lubrification, le conduit (5) s'étendant au moins partiellement à l'intérieur du déflecteur (3) et étant lié mécaniquement au déflecteur (3), et **caractérisé en ce que**
le déflecteur comprenant un premier bord longitudinal (31) et un deuxième bord longitudinal (32) opposés l'un à l'autre, le déflecteur comprenant en outre une paroi (33) reliant le premier bord longitudinal au deuxième bord longitudinal, le conduit étant lié mécaniquement à ladite paroi (33).

2. Dispositif selon la revendication 1, le déflecteur (3) étant courbé, notamment concave avec au moins une concavité destinée à être orientée vers l'intérieur d'une boîte de vitesses, et/ou le conduit (5) s'étendant longitudinalement à l'intérieur du déflecteur (3).

3. Dispositif selon la revendication 1 ou 2, comprenant au moins un élément de renforcement mécanique (20), ledit au moins un élément de renforcement mécanique (20) s'étendant notamment transversalement à l'intérieur du déflecteur (3), ledit au moins un élément de renforcement mécanique (20) s'étendant notamment du premier bord longitudinal (31) au deuxième bord longitudinal (32) du déflecteur (3) de part et d'autre du conduit (5).

4. Dispositif selon l'une des revendications précédentes, comprenant un premier connecteur (51) à une première extrémité du conduit (5) et/ou un deuxième connecteur (52) à une deuxième extrémité du conduit (5).

5. Dispositif selon l'une des revendications précédentes, comprenant au moins un moyen de fixation (60), notamment destiné à fixer le dispositif (1) à une enveloppe d'une boîte de vitesses (101) pour un véhicule.

6. Dispositif selon l'une des revendications précédentes, **caractérisé en ce qu'**il est sous la forme d'une seule pièce mécanique (1), notamment formée par moulage, par exemple d'au moins un matériau plastique.

7. Circuit de lubrification (109) pour une boîte de vitesses, comprenant au moins un dispositif (1) selon l'une des revendications précédentes, le circuit (109) comprenant notamment un échangeur thermique (113) auquel est raccordée une première extrémité du conduit (5) et/ou un tuyau (70) de circulation d'huile de lubrification auquel est raccordée une deuxième extrémité du conduit (5).

8. Boîte de vitesses (101) comprenant au moins une roue dentée et/ou au moins un engrenage et/ou au moins un roulement (107) et comprenant au moins un dispositif (1) selon l'une des revendications 1 à 6 et/ou un circuit de lubrification (109) selon la revendication 7.

9. Véhicule (100), notamment véhicule automobile, comprenant au moins un dispositif (1) selon l'une des revendications 1 à 6 et/ou un circuit de lubrification (109) selon la revendication 7 et/ou une boîte de vitesses (101) selon la revendication 8.

10. Procédé de fabrication d'un dispositif (1) selon l'une des revendications 1 à 6, comprenant une unique étape de moulage par injection d'au moins un matériau, notamment plastique.

## Patentansprüche

1. Schmiervorrichtung (1) für ein Fahrzeuggetriebe, umfassend ein Ablenkelement (3), das bestimmt ist, ein erstes Fluid, insbesondere ein erstes Schmieröl, in einem Getriebe zu verteilen, und mindestens eine Leitung (5) zur Zirkulation eines zweiten Fluids umfasst, insbesondere eines zweiten Schmieröls, beispielsweise identisch oder im Wesentlichen identisch mit dem ersten Schmieröl, wobei sich das Leitungsrohr (5) mindestens teilweise innerhalb des Ablenkelements (3) erstreckt und mechanisch mit dem Ablenkelement (3) verbunden ist, und **dadurch gekennzeichnet, dass**
das Ablenkelement eine erste Längskante (31) und eine zweite Längskante (32), die einander gegenüberliegen, umfasst, wobei das Ablenkelement ferner eine Wand (33) umfasst, die die erste Längskante mit der zweiten Längskante verbindet, wobei das Leitungsrohr mechanisch mit der Wand (33) verbunden ist.

2. Vorrichtung nach Anspruch 1, wobei das Ablenkelement (3) gebogen ist, insbesondere konkav mit mindestens einer Konkavität, die dazu bestimmt ist, in das Innere eines Getriebes gerichtet zu werden, und/oder die Leitung (5) sich in Längsrichtung innerhalb des Ablenkelements (3) erstreckt.

3. Vorrichtung nach Anspruch 1 oder 2, mindestens ein mechanisches Verstärkungselement (20) umfassend, wobei sich das mindestens eine mechanische Verstärkungselement (20) insbesondere quer innerhalb des Ablenkelements (3) erstreckt, wobei sich das mindestens eine mechanische Verstärkungselement (20) insbesondere von der ersten Längskante (31) bis zur zweiten Längskante (32) des Ablenkelements (3) beiderseits des Leitungsrohrs (5) erstreckt.

4. Vorrichtung nach einem der vorhergehenden Ansprüche, einen ersten Anschluss (51) an einem ersten Ende des Leitungsrohrs (5) und/oder einen zweiten Anschluss (52) an einem zweiten Ende des Leitungsrohrs (5) umfassend.

5. Vorrichtung nach einem der vorhergehenden Ansprüche, mindestens ein Befestigungsmittel (60), insbesondere zum Befestigen der Vorrichtung (1) an einem Gehäuse eines Getriebes (101) für ein Fahrzeug, umfassend.

6. Vorrichtung nach einem der vorhergehenden Ansprüche, **dadurch gekennzeichnet, dass** sie in Form eines einzigen mechanischen Teils (1) vorliegt, das insbesondere durch Formgießen, beispielsweise aus mindestens einem Kunststoff, hergestellt ist.

7. Schmierkreislauf (109) für ein Getriebe, mindestens eine Vorrichtung (1) nach einem der vorhergehenden Ansprüche umfassend, wobei der Kreislauf (109) insbesondere einen Wärmetauscher (113) umfasst, an den ein erstes Ende des Leitungsrohrs (5) angeschlossen ist, und/oder ein Schmierölkreislaufrohr (70), an das ein zweites Ende des Leitungsrohrs (5) angeschlossen ist.

8. Getriebe (101), mindestens ein Zahnrad und/oder mindestens ein Zahnradgetriebe und/oder mindestens ein Lager (107) und mindestens eine Vorrichtung (1) nach einem der Ansprüche 1 bis 6 und/oder einen Schmierkreislauf (109) nach Anspruch 7 umfassend.

9. Fahrzeug (100), insbesondere Kraftfahrzeug, mindestens eine Vorrichtung (1) nach einem der Ansprüche 1 bis 6 und/oder einen Schmierkreislauf (109) nach Anspruch 7 und/oder ein Getriebe (101) nach Anspruch 8 umfassend.

10. Verfahren zur Herstellung einer Vorrichtung (1) nach einem der Ansprüche 1 bis 6, umfassend einen einzigen Schritt des Spritzgießens von mindestens einem Material, insbesondere Kunststoff.

## Claims

1. Lubrication device (1) for a gearbox of a vehicle, comprising a deflector (3) intended to disperse into a gearbox a first fluid, in particular a first lubricating oil, and in that it comprises at least one conduit (5) for the circulation of a second fluid, in particular a second lubricating oil, for example identical or substantially identical to the first lubricating oil, the conduit (5) extending at least partially inside the deflector (3) and being mechanically connected to the deflector (3), and **characterised in that**
the deflector comprising a first longitudinal edge (31) and a second longitudinal edge (32) opposite to each other, the deflector further comprising a wall (33) connecting the first longitudinal edge to the second longitudinal edge, the conduit being mechanically connected to said wall (33).

2. Device according to claim 1, the deflector (3) being curved, in particular concave with at least one concavity intended to be oriented towards the inside of a gearbox, and/or the conduit (5) extending longitudinally inside the deflector (3).

3. Device according to claim 1 or 2, comprising at least one mechanical reinforcing element (20), said at least one mechanical reinforcing element (20) extending in particular transversely inside the deflector (3), said at least one mechanical reinforcing element (20) extending in particular from the first longitudinal edge (31) to the second longitudinal edge (32) of the deflector (3) on either side of the conduit (5).

4. Device according to any one of the preceding claims, comprising a first connector (51) at a first end of the conduit (5) and/or a second connector (52) at a second end of the conduit (5).

5. Device according to one of the preceding claims, comprising at least one fixing means (60), in particular for fixing the device (1) to a casing of a gearbox (101) for a vehicle.

6. Device according to one of the preceding claims, **characterised in that** it is in the form of a single mechanical part (1), in particular formed by moulding, for example of at least one plastic material.

7. A lubrication circuit (109) for a gearbox, comprising at least one device (1) according to one of the preceding claims, the circuit (109) comprising in particular a heat exchanger (113) to which a first end of the conduit (5) is connected and/or a lubricating oil circulation pipe (70) to which a second end of the conduit (5) is connected.

8. Gearbox (101) comprising at least one gearwheel and/or at least one gear and/or at least one bearing (107) and comprising at least one device (1) according to one of claims 1 to 6 and/or a lubrication circuit (109) according to claim 7.

9. Vehicle (100), in particular motor vehicle, comprising at least one device (1) according to one of claims 1 to 6 and/or a lubrication circuit (109) according to claim 7 and/or a gearbox (101) according to claim 8.

10. Method of manufacturing a device (1) according to one of claims 1 to 6, comprising a single step of injection moulding of at least one material, in particular plastic.
